# EUROPEAN PATENT APPLICATION

(11) **EP 4 160 549 A1**
(43) Date of publication of application: **05.04.2023**
(21) Application number: 22826783.7
(22) Date of filing: 29.01.2022
(51) Int. Cl.: G06V 20/00

(54) **IMAGE-BASED VEHICLE LOSS ASSESSMENT METHOD, APPARATUS AND SYSTEM**

(30) Priority: 29.06.2021 CN 202110724600
(71) Applicant: BEIJING BAIDU NETCOM SCIENCE AND TECHNOLOGY CO., LTD., Beijing 100085 (CN)
(72) Inventor: DAI, Xinyi, Beijing 100085 (CN); ZHANG, Wei, Beijing 100085 (CN); LIANG, Xiaolin, Beijing 100085 (CN)
(74) Representative: Maiwald GmbH
(86) International application number: PCT/CN2022/075124
(87) International publication number: WO 2023/273345

(57) **Abstract**

The disclosure provides an image-based vehicle damage assessment method, an image-based vehicle damage assessment apparatus and an image-based vehicle damage assessment system, and relates to the field of artificial intelligence, in particular to computer vision and deep learning technologies, and can be used in smart cloud and vehicle damage assessment scenarios. The method includes: obtaining an image to be assessed of a damaged vehicle; outputting a first damage assessment box and first damage information based on the image to be assessed; in response to a first box selection operation on the image to be assessed, determining and outputting a second damage assessment box and second damage information corresponding to the first box selection operation, wherein a vehicle damage image indicated by the second damage assessment box is different from the vehicle damage image indicated by the first damage assessment box, and the second damage information is vehicle damage information of the vehicle damage image indicated by the second damage assessment box. Therefore, the flexibility and diversity of vehicle damage assessment can be realized, the omission of damaged parts of the vehicle can be avoided, so that the technical effect of comprehensiveness and reliability for vehicle damage assessment can be improved.

## Description

### CROSS-REFERENCE TO RELATED APPLICATIONS

This application claims priority to Chinese Patent Application CN 202110724600.2, filed on June 29, 2021, titled "Image-Based Vehicle Damage Assessment Method, Apparatus and System", the entire content of which is incorporated herein by reference.

### TECHNICAL FIELD

The disclosure relates to the field of artificial intelligence, especially computer vision and deep learning technologies, and in particular to an image-based vehicle damage assessment method, apparatus and system, which can be specifically used in smart cloud and vehicle damage assessment scenarios.

### BACKGROUND

With the improvement of the quality of life, vehicles have gradually become daily necessities for users to travel, and at the same time, the number of traffic accidents is also increasing.

In the related art, an image-based vehicle damage assessment method includes: obtaining images of a damaged vehicle by users dealing with traffic accidents (such as insurance workers), transmitting the images to a pre-trained neural network model, and determining vehicle damage information of the damaged vehicle by the neural network model, in which the vehicle damage information is, for example, the degree of damage and scratches of the vehicle.

However, when using the above method to assess the damage of the damaged vehicle, the reliability of the obtained vehicle damage information depends heavily on the neural network model, so that there may be a technical problem that the accuracy of vehicle damage information obtained by assessing the damage is low due to the low accuracy of the neural network model.

### SUMMARY

The disclosure provides an image-based vehicle damage assessment method, apparatus and system, to improve the reliability of the vehicle damage assessment.

According to a first aspect of the disclosure, an image-based vehicle damage assessment method is provided. The method includes:
obtaining an image to be assessed of a damaged vehicle, and outputting a first damage assessment box and first damage information based on the image to be assessed, in which the first damage assessment box is configured to select a vehicle damage image on the image to be assessed, and the first damage information is vehicle damage information of the vehicle damage image indicated by the first damage assessment box; and
in response to a first box selection operation on the image to be assessed, determining and outputting a second damage assessment box and second damage information corresponding to the first box selection operation, in which a vehicle damage image selected by the second damage assessment box is different from the vehicle damage image selected by the first damage assessment box, and the second damage information is vehicle damage information of the vehicle damage image indicated by the second damage assessment box.

According to a second aspect of the disclosure, an image-based vehicle damage assessment apparatus is provided. The apparatus includes:
a first obtaining unit configured to obtain an image to be assessed of a damaged vehicle;
a first outputting unit configured to output a first damage assessment box and first damage information based on the image to be assessed. The first damage assessment box is configured to select a vehicle damage image on the image to be assessed, and the first damage information is vehicle damage information of the vehicle damage image indicated by the first damage assessment box;
a determining unit configured to, in response to a first box selection operation on the image to be assessed, determine a second damage assessment box and second damage information corresponding to the first box selection operation, a vehicle damage image indicated by the second damage assessment box is different from the vehicle damage image indicated by the first damage assessment box, and the second damage information is vehicle damage information of the vehicle damage image indicated by the second damage assessment box; and
a second outputting unit configured to output the second damage assessment box and the second damage information.

According to a third aspect of the disclosure, an electronic device is provided. The electronic device includes:
at least one processor; and
a memory communicatively coupled to the at least one processor; in which
the memory stores instructions executable by the at least one processor, and when the instructions are executed by the at least one processor, the at least one processor is enabled to implement a method according to the first aspect of the disclosure.

According to a fourth aspect of the disclosure, a non-transitory computer-readable storage medium having computer instructions stored thereon is provided. The computer instructions are configured to cause a computer to implement a method according to the first aspect of the disclosure.

According to a fifth aspect of the disclosure, a computer program product including computer programs is provided. The computer programs are stored in a readable storage medium, and at least one processor of the electronic device can read the computer programs from the readable storage medium. When the at least one processor executes the computer programs, the electronic device implement a method according to the first aspect of the disclosure.

According to a sixth aspect of the disclosure, an image-based vehicle damage assessment system is provided. The system includes: an image collecting device and an apparatus according to the second aspect of the disclosure. The image collecting device is configured to obtain an image to be assessed of a damaged vehicle.

According to a seventh aspect of the disclosure, embodiments of the disclosure provide computer programs, including program codes. When a computer runs the computer programs, the program codes execute a method according to any of the above embodiments.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a schematic diagram of a first embodiment of the disclosure.
FIG. 2 is a schematic diagram of an output interface according to an embodiment of the disclosure.
FIG. 3 is a schematic diagram of a second embodiment of the disclosure.
FIG. 4 is a schematic diagram of an output interface according to another embodiment of the disclosure.
FIG. 5 is a schematic diagram of a third embodiment of the disclosure.
FIG. 6 is a schematic diagram of a fourth embodiment of the disclosure.
FIG. 7 is a schematic diagram of a fifth embodiment of the disclosure.
FIG. 8 is a block diagram of an electronic device used to implement an image-based vehicle damage assessment method according to an embodiment of the disclosure.
FIG. 9 is a schematic diagram of an image-based vehicle damage assessment system that can implement an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

Vehicle damage assessment refers to determine damage to a vehicle after a traffic accident.

In the related art, there are two types of vehicle damage assessment methods commonly used, one is human-based vehicle damage assessment, and the other is image-based vehicle damage assessment.

Human-based vehicle damage assessment refers to: after a traffic accident, the staff with professional knowledge will assess the damage of the damaged vehicle based on details of the scene of the traffic accident.

However, the above human-based vehicle damage assessment method requires on-site processing by staff with strong professional knowledge, so that the cost is high, the waiting period is long, and the processing efficiency is low.

Image-based vehicle damage assessment refers to:
collecting sample images (i.e., images of a damaged vehicle) in advance, and training a basic network model based on the sample images, to obtain a vehicle damage information recognition model (the vehicle damage information recognition model is configured to identify the images of the damaged vehicle, and obtain the vehicle damage information of the damaged vehicle).

After a traffic accident, images to be recognized of a damaged vehicle in the traffic accident are obtained, the images to be recognized include damaged parts of the damaged vehicle, and the images to be recognized are input into the vehicle damage information recognition model, so that the vehicle damage information recognition model outputs vehicle damage information of the damaged vehicle.

However, for the above image vehicle damage assessment method, on the one hand, the reliability of the obtained vehicle damage information depends heavily on the vehicle damage information recognition model, and there may be a technical problem of low accuracy of the vehicle damage information obtained by damage assessment due to low accuracy of the vehicle damage information recognition model.

In order to avoid at least one of the above technical problems, inventors of the disclosure have worked with inventiveness to obtain the inventive concept of the disclosure, i.e., supporting interactive operations (e.g. providing a box selection operation for an image to be assessed), determining and outputting a damage assessment box, a vehicle damage image, and vehicle damage information of a damaged vehicle corresponding to the box selection operation.

Based on the above inventive concept, the disclosure provides an image-based vehicle damage assessment method, apparatus and system, which are applied in the field of artificial intelligence, specifically relates to computer vision and deep learning technologies, and can be used in smart cloud and vehicle damage assessment scenarios, to achieve the accuracy and reliability of vehicle damage assessment.

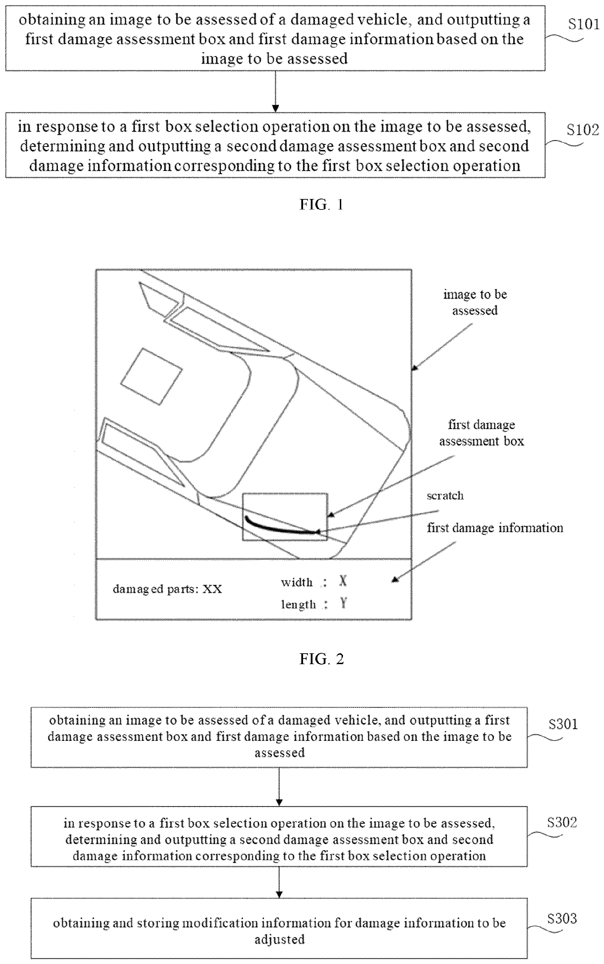

FIG. 1 is a schematic diagram of a first embodiment of the disclosure. As illustrated in FIG. 1, an image-based vehicle damage assessment method according to an embodiment of the disclosure includes:
In S 101, an image to be assessed of a damaged vehicle is obtained, and a first damage assessment box and first damage information are output based on the image to be assessed.

The first damage assessment box is configured to select a vehicle damage image on the image to be assessed, and the first damage information is vehicle damage information of the vehicle damage image indicated by the first damage assessment box.

For example, the execution subject of the embodiment may be an image-based vehicle damage assessment apparatus (hereinafter referred to as a vehicle damage assessment apparatus). The vehicle damage assessment apparatus may be a server (including a local server and a cloud server, and the server may be a cloud control platform, a vehicle infrastructure cooperative management platform, a central subsystem, an edge computing platform, and a cloud computing platform), a roadside device, a terminal device, a processor, and a chip, which is not limited in the embodiment.

Roadside device may be a roadside sensing device with computing functions or roadside computing device connected to the roadside sensing device. In the intelligent traffic vehicle infrastructure cooperative system architecture, the roadside device includes a roadside sensing device and a roadside computing device, the roadside sensing device (such as a roadside camera) is connected to a roadside computing device (such as a roadside computing unit (RSCU)), and the roadside computing device is connected to a server. The server can communicate with the autonomous driving or assisted driving vehicle in various ways. Alternatively, if the roadside sensing device has the computing function, the roadside sensing device is directly connected to the server. The above connection can be wired or wireless.

It should be understood that "first" or "second" in the embodiment is used to distinguish different objects, and cannot be understood as a limitation on objects. For example, the term "first" in the first damage assessment box is used to distinguish it from the second damage assessment box in the following, and cannot be understood as a limitation on the first damage assessment box.

The image to be assessed is an image of a damaged vehicle, and contains damaged parts of the damaged vehicle. The size of the damage image is not limited in the embodiment. For example, the size of the damage image may be determined based on the performance of the image collecting device that collects the damage image. In another example, the damage image may be determined based on preset requirements of the damage assessment apparatus, which will not be listed here.

The following examples can realize obtaining the image to be assessed.

In an example, the vehicle damage assessment apparatus can be connected to the image collecting device and receive the images sent by the image collecting device. The image can be a panoramic image of the damaged vehicle, or a partial image containing the damaged parts (i.e., the image to be assessed).

If the image sent by the image collecting device is a panoramic image of the damaged vehicle, the vehicle damage assessment apparatus may determine the image to be assessed based on the panoramic image.

In another example, the vehicle damage assessment apparatus may provide a tool for loading an image, and the user can transmit the images to the vehicle damage assessment apparatus through the tool. Similarly, the image transmitted by the tool for loading an image may be the panoramic image of the damaged vehicle, or may be a partial image containing damaged parts (i.e., the image to be assessed).

The tool for loading the image can be an interface for connecting with external devices, such as an interface for connecting with other storage devices, through which the images transmitted by the external devices are obtained. The tool for loading the image can also be a display device, for example, the vehicle damage assessment apparatus can input the interface of loading image function on the display device, the user can import the image to the vehicle damage assessment apparatus through the interface, and the vehicle damage assessment apparatus obtains the imported image (which may be the panoramic image or the image to be assessed).

For example, the image to be assessed includes a vehicle damage image, and the first damage assessment box is configured to select the part of the image (i.e., the vehicle damage image) from the image to be assessed, as shown in FIG. 2.

Moreover, the vehicle damage assessment apparatus may output the vehicle damage information of the vehicle damage image.

For example, as illustrated in FIG. 2, the vehicle damage may specifically be that the vehicle is scratched, leading to scratches on the damaged vehicle, then the vehicle damage image includes a scratch, and the first damage information output by the vehicle damage assessment apparatus may include: a scratch width ("width: X" as shown in FIG. 2), a scratch length ("length: Y" as shown in FIG. 2), and a scratched part (i.e., "damaged part: XX" as shown in FIG. 2).

The embodiment does not limit the method for determining the first damage information. For example, the method may be implemented by means of image recognition, or by means of a network model.

In S102: in response to a first box selection operation on the image to be assessed, a second damage assessment box and second damage information corresponding to the first box selection operation are determined and output.

The vehicle damage image selected by the second damage assessment box is different from the vehicle damage image selected by the first damage assessment box, and the second damage information is the vehicle damage information of the vehicle damage image indicated by the second damage assessment box.

For example, in combination with the above example, the user can perform a first box selection operation on the output image to be assessed. Correspondingly, the vehicle damage assessment apparatus generates and outputs the second damage assessment box based on the first box selection operation.

For example, the vehicle damage assessment apparatus may determine a box selection trajectory corresponding to the first box selection operation based on the user's first box selection operation, and generate and output the second damage assessment box according to the box selection trajectory.

That is, the vehicle damage assessment apparatus may determine, based on the user's first box selection operation on the image to be assessed, more vehicle damage images of the damaged vehicle (for example, the vehicle damage image selected by the second damage assessment box in the above example), and the vehicle damage image selected based on the first box selection is different from the vehicle damage image selected by the first damage assessment box, thus it is possible to improve the comprehensiveness and completeness of the determined vehicle damage image.

Correspondingly, the vehicle damage assessment apparatus can generate and output the second damage information according to the second damage assessment box, and when the second damage information is determined based on the vehicle damage image selected by the second damage assessment box, it is equivalent to that the damage information obtained by using the method of the embodiment may include the first damage information and the second damage information. Therefore, the damage information of the damaged vehicle can be evaluated comprehensively and reliably, thereby improving the technical effect of the accuracy and reliability of vehicle damage assessment.

Based on the above analysis, the embodiment provides an image-based vehicle damage assessment method. The method includes: obtaining an image to be assessed of a damaged vehicle, and outputting a first damage assessment box and first damage information based on the image to be assessed, in which the first damage assessment box is configured to select a vehicle damage image on the image to be assessed, and the first damage information is vehicle damage information of the vehicle damage image indicated by the first damage assessment box; and in response to a first box selection operation on the image to be assessed, determining and outputting a second damage assessment box and second damage information corresponding to the first box selection operation, in which a vehicle damage image selected by the second damage assessment box is different from the vehicle damage image selected by the first damage assessment box, and the second damage information is vehicle damage information of the vehicle damage image indicated by the second damage assessment box. The following technical features are cited in the embodiment: according to the first box selection operation on the image to be assessed, the second damage assessment box and the second damage information are determined and output, the flexibility and diversity of vehicle damage assessment can be realized in combination with user interaction. In addition, the omission of damaged parts of the vehicle can be avoided, so that the vehicle damage assessment covers as many damaged parts of the vehicle as possible, thereby improving the technical effect of the comprehensiveness and reliability of the vehicle damage assessment.

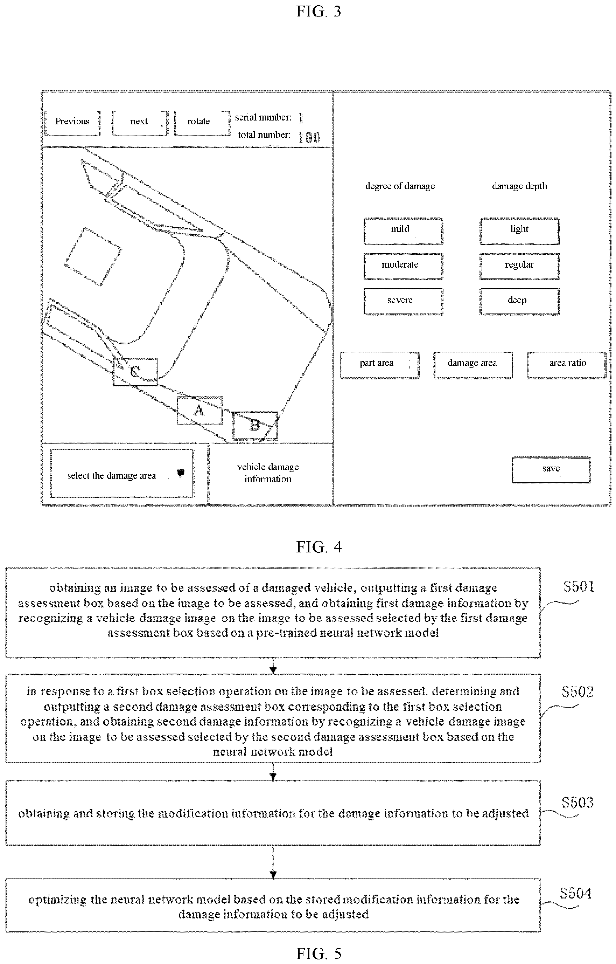

FIG. 3 is a schematic diagram of a second embodiment of the disclosure. As illustrated in FIG. 3, an image-based vehicle damage assessment method according to an embodiment of the disclosure includes:
In S301: an image to be assessed of a damaged vehicle is obtained, and a first damage assessment box and first damage information are output based on the image to be assessed.

The first damage assessment box is configured to select the vehicle damage image on the image to be assessed, and the first damage information is the vehicle damage information of the vehicle damage image indicated by the first damage assessment box.

For example, for the implementation principle of S301, reference may be made to the first embodiment, which will not be repeated here.

In some embodiments, there are a plurality of images to be assessed. For example, if the damaged vehicle has a plurality of damages, there are a plurality of images to be assessed.

Moreover, in response to that there are a plurality of images to be assessed, outputting the first damage assessment box and the first damage information based on the image to be assessed, includes the following steps.

In step 1, an operation icon is output.

The operation icon is configured to select the image to be assessed for vehicle damage assessment.

For example, as illustrated in FIG. 4, the operation icon may be "previous" and "next" as shown in FIG. 4.

In detail, there are a plurality of images to be assessed, the "previous" icon may be used to select the previous image to be assessed of the current image to be assessed, and the "next" icon may be used to select the next image to be assessed of the current image to be assessed.

In step 2, in response to triggering an association operation of the operation icon, an image to be assessed corresponding to the association operation is determined from the plurality of images to be assessed and is output, and the first damage assessment box of the image to be assessed corresponding to the association operation, and the first damage information of the image to be assessed corresponding to the association operation are output.

In one example, the association operation may be a click operation.

For example, as illustrated in FIG. 4, the user can click on the "previous" operation icon. According to the click operation, the vehicle damage assessment apparatus outputs the previous image to be assessed of the current image to be assessed, and outputs the vehicle damage information represented by the previous image to be assessed of the current image to be assessed.

In another example, the association operation may be a sliding operation.

For example, the vehicle damage assessment apparatus may include an access device, such as a mouse. Correspondingly, when the user slides a scroll wheel of the mouse, the vehicle damage assessment apparatus outputs the previous image to be assessed of the current image to be assessed according to the sliding operation, and outputs the vehicle damage information represented by the next image to be assessed of the current image to be assessed; or outputs the next image to be assessed of the current image to be assessed, and outputs the vehicle damage information represented by the next image to be assessed of the current image to be assessed.

In still another example, the association operation may be a shortcut key operation.

For example, the vehicle damage assessment apparatus may include an access device, such as a keyboard. The vehicle damage assessment apparatus may be pre-stored a mapping relation between selecting the previous image to be assessed of the current image to be assessed and a shortcut key, and a mapping relation between selecting the next image to be assessed of the current image to be assessed and a shortcut key.

Correspondingly, when the user operates the shortcut key on the keyboard, the vehicle damage assessment apparatus determines and outputs the vehicle damage information represented by the next image to be assessed of the current image to be assessed according to the triggered shortcut key and the mapping relation; or outputs the next image to be assessed of the current image to be assessed, and outputs the vehicle damage information represented by the next image to be assessed of the current image to be assessed.

It is worth noting that, in the embodiment, the first damage assessment box and the first damage information are determined based on the operation icon and the association operation, which can achieve the technical effects of flexibility, diversity and comprehensiveness in displaying the damaged vehicle and the damage information.

In some embodiments, the vehicle damage assessment apparatus may also support a rotation operation of the image to be assessed. For example, the vehicle damage assessment apparatus may output a "rotate" icon as shown in FIG. 4, and in response to the user clicking on the "rotate" icon, the vehicle damage assessment apparatus performs rotation processing on the image to be assessed.

The angle of rotation can be preset by the vehicle damage assessment apparatus, such as 90 degrees.

In some embodiments, the vehicle damage assessment apparatus may also output a serial number of the current image to be assessed ("serial number: 1" as shown in FIG. 4), and a total number of the images to be assessed ("total number: 100" as shown in FIG. 4).

In some embodiments, there are a plurality of first damage assessment boxes. For example, if the damaged vehicle has a plurality of damages, the damage images of the damaged vehicle at a plurality of places are included in the images to be assessed.

As illustrated in FIG. 4, the images to be assessed includes three first damage assessment boxes. The vehicle damage assessment apparatus can assign an identifier to each of the three first damage assessment boxes, and output the respective identifiers of the three first damage assessment boxes while outputting the three first damage assessment boxes. For example, as illustrated in FIG. 4, the identifiers of the three first damage assessment boxes are A, B, and C, respectively.

In the embodiment, by assigning and outputting identifiers for a plurality of first damage assessment boxes, the user can learn about each damaged area of the damaged vehicle, which is convenient for the user to identify each damaged area, so that the user can check all the damaged area to avoid omission, and the technical effect of improving the comprehensiveness and reliability of vehicle damage assessment is achieved.

Correspondingly, the user can perform a selection operation on any identifier, and the vehicle damage assessment apparatus determines the first damage assessment box selected by the user according to the selection operation, thereby generating a corresponding first damage information.

In an example, the vehicle damage assessment apparatus may output an interface that supports the user to trigger a selection operation. For example, the vehicle damage assessment apparatus may output a pull-down icon of "select the damage area" shown in FIG. 4, the user can pull down the pull-down icon to select a corresponding first damage assessment box.

As shown in FIG. 4, when the user selects the first damage assessment box through the pull-down icon of "select the damage area", the vehicle damage assessment apparatus can output the first damage information corresponding to the selected first damage assessment box. For example, if the selected first damage assessment box is A, the vehicle damage assessment apparatus can identify the damage image in A, to obtain the vehicle damage information of the vehicle damage image indicated by the damage image in A ("vehicle damage information" shown in FIG. 4, the specific content of the vehicle damage information can refer to the above example).

In another example, in combination with the above examples, the vehicle damage assessment apparatus may include a mouse, and the selection operation may be implemented by the mouse. For example, if the dwell time of the mouse in a first damage assessment box is longer than a preset time threshold, it is determined that the selection operation is triggered, and the vehicle damage assessment apparatus may determine the first damage assessment box whose dwell time is longer than the time threshold as the selected first damage assessment box, to generate and output the vehicle damage information corresponding to the first damage assessment box.

In yet another example, in combination with the above examples, the vehicle damage assessment apparatus may include a keyboard, then the vehicle damage assessment apparatus may pre-establish a mapping relation between the identifiers and the shortcut keys, and determine the selected first damage assessment box based on the user's operation on the shortcut keys and the mapping relation.

In the embodiment, the user can select the first damage assessment box randomly, and learn the first damage information corresponding to the selected first damage assessment box by reading the interface, which improves the technical effects of flexibility and variety of the first damage information.

In S302: in response to a first box selection operation on the image to be assessed, a second damage assessment box and second damage information corresponding to the first box selection operation are determined and output.

The vehicle damage image selected by the second damage assessment box is different from the vehicle damage image selected by the first damage assessment box, and the second damage information is vehicle damage information of the vehicle damage image indicated by the second damage assessment box.

For example, for the implementation principle of S302, reference may be made to the first embodiment, which will not be repeated here.

In S303: modification information for damage information to be adjusted are obtained and stored.

The damage information to be adjusted includes the first damage information and/or the second damage information.

Based on the above description of the related art, in the related art, the first damage information and the second damage information are predetermined information, that is, the vehicle damage assessment apparatus mechanically outputs the first damage information and the second damage information. However, the first damage information and the second damage information cannot be adjusted adaptively. In the embodiment, the feature of acquiring and storing the modification information is introduced, and by the introduced feature, the flexibility of processing the first damage information and the second damage information can be realized, and the technical effect of the accuracy and reliability of the first damage information and the second damage information can also be improved.

For example, as illustrated in FIG. 4, the vehicle damage assessment apparatus may provide an interface for supporting output of the modification information, and the user can modify the first damage information and/or the second damage information through the interface, and the vehicle damage assessment apparatus generates and stores the modification information according to the modification operation of the user.

In some embodiments, the damage information to be adjusted includes damage information to be adjusted corresponding to each of a plurality of damage categories.

For example, the damage categories may be "degree of damage", and "damage depth" as shown in FIG. 4. The damage category can include sub-categories. As illustrated in FIG. 4, "degree of damage" includes sub-categories: "mild" "moderate" and "severe", and "damage depth" includes sub-categories: "light", "regular" and "deep", and detailed information corresponding to sub-categories, such as light (≤1 cm), can be displayed.

Correspondingly, S303 may include the following steps.

In step 1, the modification information for the damage information to be adjusted for a first damage category is obtained, and the modification information for the damage information to be adjusted for a second damage category is determined based on the modification information for the damage information to be adjusted for the first damage category.

The plurality of damage categories includes a first damage category and a second damage category, and the second damage category is in an adjustment association relationship with the first damage category.

The adjustment association relationship refers to that the modification of the damage information of one damage category will automatically change the damage information of another damage category.

For example, if one damage category is a part area of the damaged vehicle indicated by the damage image selected by the first damage assessment box ("part area" as shown in FIG. 4), another damage category is a damage area of the damaged vehicle indicated by the damage image selected by the first damage assessment box ("damage area" as shown in FIG. 4, which may be the scratched area in the above examples), and one damage category is a ratio of the damage area to the part area ("area ratio" as shown in FIG. 4), when the part area changes, the area ratio also changes.

In other embodiments, the vehicle damage assessment apparatus may provide a save icon for saving current information, such as "save" icon as shown in FIG. 4.

In other embodiments, the vehicle damage assessment apparatus may further provide icons for selecting damaged locations and damaged parts, to conveniently select the damaged locations and damaged parts.

It should be understood that FIG. 4 is only used to illustrate the corresponding operations and display effects that are supported by the vehicle damage assessment apparatus, and should not be construed as a limitation on the function of the vehicle damage assessment apparatus.

In step 2, the modification information for the damage information to be adjusted for the first damage category and the modification information for the damage information to be adjusted for the second damage category are stored respectively.

In the embodiment, in combination with the adjustment association relationship, the modification information of the damage information to be adjusted for different damage categories in the adjustment association relationship is determined, to achieve the technical effect of improving the efficiency and flexibility.

In other embodiments, S303 may include: in response to a second box selection operation for a damage assessment box, determining a third damage assessment box and determining attribute information of the third damage assessment box, in which the damage assessment box is the first damage assessment box or the second damage assessment box; and determining and storing the modification information for the damage information to be adjusted based on the attribute information.

The attribute information can represent the damage size of the vehicle part indicated by the vehicle damage image selected by the third damage assessment box. In detail, the pixel information of the vehicle damage image selected by the third damage assessment box is obtained, and the damage size of a vehicle part is determined based on the pixel information.

Correspondingly, the vehicle damage assessment apparatus may re-determine and store the area ratio (i.e., the modification information) based on the damage size of the vehicle part as described above.

In the embodiment, the vehicle damage assessment apparatus can conveniently and quickly determine and store the modification information based on the user's second box selection operation, which improves the flexibility of vehicle damage assessment, satisfies the user's modification requirements, and improves the technical effect of the accuracy and reliability of vehicle damage assessment.

FIG. 5 is a schematic diagram of a third embodiment of the disclosure. As illustrated in FIG. 5, an image-based vehicle damage assessment method according to an embodiment of the disclosure includes:
In S501, an image to be assessed of a damaged vehicle is obtained, a first damage assessment box is output based on the image to be assessed, and first damage information is obtained by recognizing a vehicle damage image on the image to be assessed selected by the first damage assessment box based on a pre-trained neural network model.

The first damage assessment box is configured to select a vehicle damage image on the image to be assessed, and the first damage information is vehicle damage information of the vehicle damage image indicated by the first damage assessment box.

In the embodiment, the pre-trained neural network model may be set in the vehicle damage assessment apparatus, and the neural network model is configured to identify vehicle damage images to obtain corresponding damage information. For the training of the neural network model, reference may be made to the related art, which will not be repeated here.

It should be noted that, in some embodiments, the image to be assessed may be output to the neural network model, and the neural network model outputs the first damage assessment box and the first damage information.

That is, the first damage assessment box may be generated and output by other recognition methods (such as optical character recognition (OCR)), or may be generated and output based on a neural network model, which is not limited in the embodiment.

In S502, in response to a first box selection operation on the image to be assessed, a second damage assessment box corresponding to the first box selection operation is determined and output, and second damage information is obtained by recognizing a vehicle damage image on the image to be assessed selected by the second damage assessment box based on the neural network model.

The vehicle damage image selected by the second damage assessment box is different from the vehicle damage image selected by the first damage assessment box, and the second damage information is vehicle damage information of the vehicle damage image indicated by the second damage assessment box.

Similarly, in this step, the second damage assessment box may also be determined by the neural network model, or may be determined by other methods, which is not limited in the embodiment.

In S503, the modification information for the damage information to be adjusted are obtained and stored.

The damage information to be adjusted includes the first damage information and/or the second damage information.

For example, for the implementation principle of S503, reference may be made to the second embodiment, which will not be repeated here.

In S504, the neural network model is optimized based on the stored modification information for the damage information to be adjusted.

In an example, a sample data set for optimizing the neural network model can be obtained, and the modification information of the damage information to be adjusted can be used as the standard recognition result of the sample data set to optimize the neural network model.

In another example, the modification information of the damage information to be adjusted can be used as a validation data set, to optimize the neural network model.

It should be noted that, in the embodiment, the neural network model is optimized based on the modification information for the damage information to be adjusted, and the recognition accuracy of the optimized neural network model can be improved, thereby improving the technical effect of accuracy and precision of vehicle damage assessment.

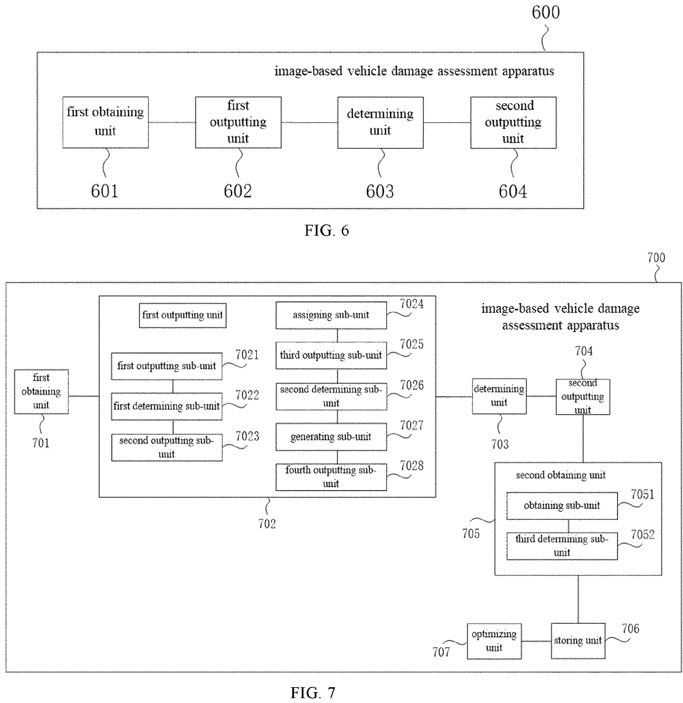

FIG. 6 is a schematic diagram of a fourth embodiment of the disclosure. As illustrated in FIG. 6, an image-based vehicle damage assessment apparatus according to the embodiment of the disclosure includes:
a first obtaining unit 601 configured to obtain an image to be assessed of a damaged vehicle.
a first outputting unit 602 configured to output a first damage assessment box and first damage information based on the image to be assessed, in which the first damage assessment box is configured to select a vehicle damage image on the image to be assessed, and the first damage information is vehicle damage information of the vehicle damage image indicated by the first damage assessment box.
a determining unit 603 configured to, in response to a first box selection operation on the image to be assessed, determine a second damage assessment box and second damage information corresponding to the first box selection operation, in which a vehicle damage image selected by the second damage assessment box is different from the vehicle damage image selected by the first damage assessment box, and the second damage information is vehicle damage information of the vehicle damage image indicated by the second damage assessment box.
a second outputting unit 604 configured to output the second damage assessment box and the second damage information.

FIG. 7 is a schematic diagram of a fifth embodiment of the disclosure. As illustrated in FIG. 7, an image-based vehicle damage assessment apparatus includes:
a first obtaining unit 701 configured to obtain an image to be assessed of a damaged vehicle.
a first outputting unit 702 configured to output a first damage assessment box and first damage information based on the image to be assessed, in which the first damage assessment box is configured to select a vehicle damage image on the image to be assessed, and the first damage information is vehicle damage information of the vehicle damage image indicated by the first damage assessment box.

As illustrated in FIG. 7, in some embodiments, in response to that there are a plurality of image to be assessed, the first outputting unit 702 includes:
a first outputting sub-unit 7021 configured to output an operation icon configured to select the image to be assessed for vehicle damage assessment.
a first determining sub-unit 7022 configured to, in response to triggering an association operation of the operation icon, determine an image to be assessed corresponding to the association operation from the plurality of images to be assessed.
a second outputting sub-unit 7023 configured to output the image to be assessed corresponding to the association operation, the first damage assessment box of the image to be assessed corresponding to the association operation, and the first damage information of the image to be assessed corresponding to the association operation.

As illustrated in FIG. 7, in some embodiments, in response to that there are a plurality of first damage assessment boxes, the first outputting unit 702 includes:
an assigning sub-unit 7024 configured to assign an identifier to each of the first damage assessment boxes.
a third outputting sub-unit 7025 configured to output the identifier of each of the first damage assessment boxes in response to outputting each of the first damage assessment boxes.
a second determining sub-unit 7026 configured to, in response to detecting a selection operation on any identifier, determine the first damage assessment box of the identifier based on the selection operation.
a generating sub-unit 7027 configured to generate the vehicle damage information of the vehicle damage image indicated by the first damage assessment box corresponding to the identifier.
a fourth outputting sub-unit 7028 configured to output the vehicle damage information of the vehicle damage image indicated by the first damage assessment box corresponding to the identifier.
a determining unit 703 configured to, in response to a first box selection operation on the image to be assessed, determine a second damage assessment box and second damage information corresponding to the first box selection operation, in which a vehicle damage image selected by the second damage assessment box is different from the vehicle damage image selected by the first damage assessment box, and the second damage information is vehicle damage information of the vehicle damage image indicated by the second damage assessment box.
a second outputting unit 704 configured to output the second damage assessment box and the second damage information.
a second obtaining unit 705 configured to obtain modification information for damage information to be adjusted, in which the damage information to be adjusted includes the first damage information and/or the second damage information.
a storing unit 706 configured to store the modification information for the damage information to be adjusted.

As illustrated in FIG. 7, in some embodiments, the damage information to be adjusted includes damage information to be adjusted corresponding to each of a plurality of damage categories, and the second obtaining unit 705 includes:
an obtaining sub-unit 7051 configured to obtain the modification information for the damage information to be adjusted for a first damage category.
a third determining sub-unit 7052 is configured to determine the modification information for the damage information to be adjusted for a second damage category based on the modification information for the damage information to be adjusted for the first damage category, in which the damage categories include the first damage category and the second damage category, and the second damage category and the first damage category are in an adjustment association relationship.
a storing unit 706 configured to store the modification information for the damage information to be adjusted for the first damage category and the modification information for the damage information to be adjusted for the second damage category respectively.

In some other embodiments, the obtaining unit 705 is configured to, in response to a second box selection operation for the damage assessment box, determine a third damage assessment box and determine attribute information of the third damage assessment box, in which the damage assessment box is the first damage assessment box or the second damage assessment box.

The storing unit 706 is configured to determine and store the modification information for the damage information to be adjusted based on the attribute information.

The optimizing unit 707 is configured to optimize the neural network model based on the modification information for the damage information to be adjusted.

The damage information is determined based on a pre-trained neural network model, and the damage information includes the first damage information and the second damage information.

According to an embodiment of the disclosure, the disclosure also provides an electronic device and a readable storage medium.

According to an embodiment of the disclosure, the disclosure also provides a computer program product. The computer program product includes computer programs, the computer programs are stored in a readable storage medium, and at least one processor of the electronic device can read the computer programs from the readable storage medium. When the at least one processor executes the computer programs, the electronic device implement the solution according to any one of the above embodiments.

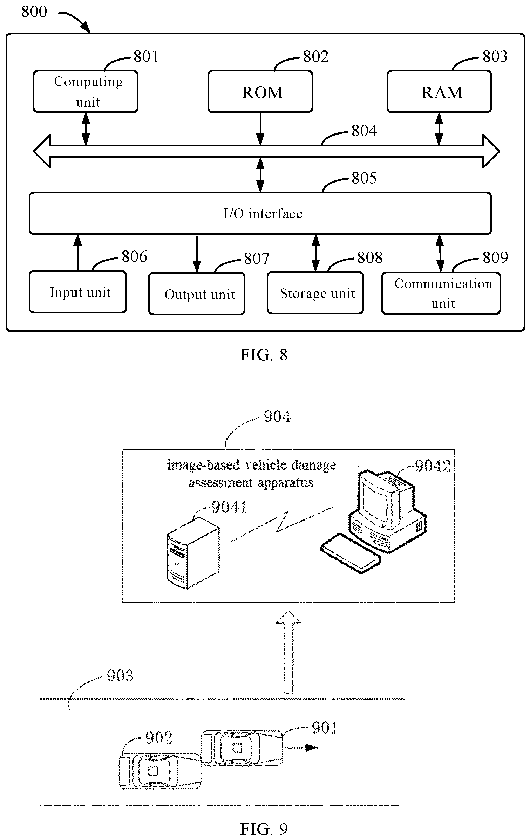

FIG. 8 is a block diagram of an example electronic device 800 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the electronic device 800 includes a computing unit 801 performing various appropriate actions and processes based on computer programs stored in a read-only memory (ROM) 802 or computer programs loaded from the storage unit 808 to a random access memory (RAM) 803. In the RAM 803, various programs and data required for the operation of the device 800 are stored. The computing unit 801, the ROM 802, and the RAM 803 are connected to each other through a bus 804. An input/output (I/O) interface 805 is also connected to the bus 804.

Components in the device 800 are connected to the I/O interface 805, including: an inputting unit 806, such as a keyboard, a mouse; an outputting unit 807, such as various types of displays, speakers; a storage unit 808, such as a magnetic disk, an optical disk; and a communication unit 809, such as network cards, modems, and wireless communication transceivers. The communication unit 809 allows the device 800 to exchange information/data with other devices through a computer network such as the Internet and/or various telecommunication networks.

The computing unit 801 may be various general-purpose and/or dedicated processing components with processing and computing capabilities. Some examples of computing unit 801 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 801 executes the various methods and processes described above, such as the image-based vehicle damage assessment method. For example, in some embodiments, the method may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded on the RAM 803 and executed by the computing unit 801, one or more steps of the method described above may be executed. Alternatively, in other embodiments, the computing unit 801 may be configured to perform the image-based vehicle damage assessment method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), complex Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program codes configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program codes may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor) for displaying information to a user; and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computer system that includes any combination of such background components, intermediate computing components, or front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system to solve the problem that there are the defects of difficult management and weak business expansion in the traditional physical hosts and (Virtual Private Server) VPS services. The server may be a server of a distributed system, or a server combined with a block-chain.

According to another aspect of embodiments of the disclosure, the embodiments of the disclosure further provide an image-based vehicle damage assessment system. The system includes: an image collecting device and the image-based vehicle damage assessment apparatus according to any one of the above embodiments. The image collecting device is configured to obtain an image to be assessed of a damaged vehicle.

For example, as illustrated in FIG. 9, both a first vehicle 901 and a second vehicle 902 are traveling on a road 903. Since the speed of the first vehicle 901 is relatively slow and the speed of the second vehicle 902 is relatively fast, rear-end traffic incident may occur.

The image collecting device (not shown in the figure, the image collecting device may be a device with a shooting function, such as a camera) acquires an image to be assessed of a damaged vehicle, and sends the image to be assessed to the image-based vehicle damage assessment apparatus 904.

As illustrated in FIG. 9, the image-based vehicle damage assessment apparatus 904 includes a server 9041 and a display 9042.

The server 9041 is configured to determine a first damage assessment box and first damage information based on the image to be assessed, and control the display 9042 to output the image to be assessed, the first damage assessment box and the first damage information.

The server 9041 is configured to, in response to a first box selection operation on the image to be assessed, determine a second damage assessment box corresponding to the first box selection operation, determine vehicle damage information of the vehicle damage image indicated by the second damage assessment box (i.e., second damage information), and control the display 9042 to output the second damage assessment box and the second damage information.

In some embodiments, the first box selection operation is obtained by monitoring the display 9042 using the server 9041. That is, the server 9041 can monitor the first box selection operation based on the display 9042 of the user.

Similarly, the server 9041 can control the display 9042 to display other contents, as shown in FIG. 4, which will not be listed one by one here.

In some embodiments, the image-based vehicle damage assessment apparatus 904 may further include external devices, such as a mouse, and a keyboard. For the description of the mouse and the keyboard, reference may be made to the above-mentioned embodiments, which will not be repeated here.

According to another aspect of the embodiments of the disclosure, the embodiments of the disclosure further provide computer program product including computer codes, wherein when the computer codes are executed by a processor, the method according to any one of above embodiments is implemented

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. An image-based vehicle damage assessment method, comprising:
obtaining an image to be assessed of a damaged vehicle, and outputting a first damage assessment box and first damage information based on the image to be assessed, wherein the first damage assessment box is configured to select a vehicle damage image on the image to be assessed, and the first damage information is vehicle damage information of the vehicle damage image indicated by the first damage assessment box; and
in response to a first box selection operation on the image to be assessed, determining and outputting a second damage assessment box and second damage information corresponding to the first box selection operation, wherein a vehicle damage image selected by the second damage assessment box is different from the vehicle damage image selected by the first damage assessment box, and the second damage information is vehicle damage information of the vehicle damage image indicated by the second damage assessment box.

2. The method of claim 1, wherein in response to that there are a plurality of image to be assessed, outputting a first damage assessment box and first damage information based on the image to be assessed, comprises:
outputting an operation icon configured to select the image to be assessed for vehicle damage assessment; and
in response to triggering an association operation of the operation icon, determining and outputting an image to be assessed corresponding to the association operation from the plurality of image to be assessed, and outputting the first damage assessment box of the image to be assessed corresponding to the association operation, and the first damage information of the image to be assessed corresponding to the association operation.

3. The method of claim 1 or 2, wherein in response to that there are a plurality of first damage assessment boxes, outputting the first damage assessment box based on the image to be assessed comprises:
assigning an identifier to each of the first damage assessment boxes, and in response to outputting each of the first damage assessment boxes, outputting the identifier for each of the first damage assessment boxes.

4. The method of claim 3, wherein outputting the first damage information based on the image to be assessed, comprises:
in response to detecting a selection operation on any identifier, determining the first damage assessment box of the identifier based on the selection operation, and generating and outputting the vehicle damage information of the vehicle damage image indicated by the first damage assessment box of the identifier.

5. The method of any one of claims 1 to 4, further comprising:
obtaining and storing modification information for damage information to be adjusted, wherein the damage information to be adjusted comprises the first damage information and/or the second damage information.

6. The method of claim 5, wherein the damage information to be adjusted comprises damage information to be adjusted corresponding to each of a plurality of damage categories, and obtaining and storing the modification information for the damage information to be adjusted, comprises:
obtaining the modification information for the damage information to be adjusted for a first damage category, and determining the modification information for the damage information to be adjusted for a second damage category based on the modification information for the damage information to be adjusted for the first damage category, wherein the plurality of damage categories comprise the first damage category and the second damage category, and the second damage category and the first damage category are in an adjustment association relationship; and
storing the modification information for the damage information to be adjusted for the first damage category and the modification information for the damage information to be adjusted for the second damage category respectively.

7. The method of claim 5, wherein obtaining and storing the modification information for the damage information to be adjusted comprises:
in response to a second box selection operation for a damage assessment box, determining a third damage assessment box, and determining attribute information of the third damage assessment box, wherein the damage assessment box is the first damage assessment box or the second damage assessment box; and
determining and storing the modification information for the damage information to be adjusted based on the attribute information.

8. The method of any one of claims 5 to 7, wherein the damage information is determined based on a pre-trained neural network model, the damage information comprises the first damage information and the second damage information, and the method further comprises:
optimizing the neural network model based on the stored modification information for the damage information to be adjusted.

9. An image-based vehicle damage assessment apparatus, comprising:
a first obtaining unit, configured to obtain an image to be assessed of a damaged vehicle;
a first outputting unit, configured to output a first damage assessment box and first damage information based on the image to be assessed, wherein the first damage assessment box is configured to select a vehicle damage image on the image to be assessed, and the first damage information is vehicle damage information of the vehicle damage image indicated by the first damage assessment box; and
a determining unit, configured to, in response to a first box selection operation on the image to be assessed, determine a second damage assessment box and second damage information corresponding to the first box selection operation, wherein a vehicle damage image selected by the second damage assessment box is different from the vehicle damage image selected by the first damage assessment box, and the second damage information is vehicle damage information of the vehicle damage image indicated by the second damage assessment box; and
a second outputting unit, configured to output the second damage assessment box and the second damage information.

10. The apparatus of claim 9, wherein in response to that there are a plurality of image to be assessed, the first outputting unit comprises:
a first outputting sub-unit, configured to output an operation icon configured to select the image to be assessed for vehicle damage assessment; and
a first determining sub-unit, configured to, in response to triggering an association operation of the operation icon, determine an image to be assessed corresponding to the association operation from the plurality of image to be assessed; and
a second outputting sub-unit, configured to output the image to be assessed corresponding to the association operation, the first damage assessment box of the image to be assessed corresponding to the association operation, and the first damage information of the image to be assessed corresponding to the association operation.

11. The apparatus of claim 9 or 10, wherein in response to that there are a plurality of first damage assessment boxes, the first outputting unit comprises:
an assigning sub-unit, configured to assign an identifier to each of the plurality of first damage assessment boxes; and
a third outputting sub-unit, configured to in response to outputting each of the first damage assessment boxes, output the identifiers for each of the first damage assessment boxes.

12. The apparatus of claim 11, wherein the first outputting unit comprises:
a second determining sub-unit, configured to, in response to detecting a selection operation on any identifier, determine the first damage assessment box of the identifier based on the selection operation;
a generating sub-unit, configured to generate the vehicle damage information of the vehicle damage image indicated by the first damage assessment box of the identifier; and
a fourth outputting sub-unit, configured to output the vehicle damage information of the vehicle damage image indicated by the first damage assessment box of the identifier.

13. The apparatus of any one of claims 9 to 12, further comprising:
a second obtaining unit, configured to obtain modification information for damage information to be adjusted, wherein the damage information to be adjusted comprises the first damage information and/or the second damage information; and
a storing unit, configured to store the modification information for the damage information to be adjusted.

14. The apparatus of claim 13, wherein the damage information to be adjusted comprises damage information to be adjusted corresponding to each of a plurality of damage categories, and the second obtaining unit comprises:
an obtaining sub-unit, configured to obtain the modification information for the damage information to be adjusted for a first damage category;
a third determining sub-unit, configured to determine the modification information for the damage information to be adjusted for a second damage category based on the modification information for the damage information to be adjusted for the first damage category, wherein the plurality of damage categories comprise the first damage category and the second damage category, and the second damage category and the first damage category are in an adjustment association relationship; and
the storing unit, configured to store the modification information for the damage information to be adjusted for the first damage category and the modification information for the damage information to be adjusted for the second damage category respectively.

15. The apparatus of claim 13, wherein
the obtaining unit is configured to, in response to a second box selection operation for a damage assessment box, determine a third damage assessment box and attribute information of the third damage assessment box, wherein the damage assessment box is the first damage assessment box or the second damage assessment box; and
the storing unit is configured to determine and store the modification information for the damage information to be adjusted based on the attribute information.

16. The apparatus of any one of claims 13 to 15, wherein the damage information is determined based on a pre-trained neural network model, the damage information comprises the first damage information and the second damage information, and the apparatus further comprises:
an optimizing unit, configured to optimize the neural network model based on the stored modification information for the damage information to be adjusted.

17. An electronic device, comprising:
at least one processor; and
a memory communicatively coupled to the at least one processor; wherein,
the memory stores instructions executable by the at least one processor, when the instructions are executed by the at least one processor, the at least one processor is enabled to execute the method according to any one of claims 1-8.

18. A non-transitory computer-readable storage medium having computer instructions thereon, wherein the computer instructions are configured to cause a computer to execute a method according to any one of claims 1-8.

19. A computer program product comprising computer programs, wherein when the computer programs are executed by a processor, the computer programs implement a method according to any one of claims 1-8.

20. An image-based vehicle damage assessment system, comprising: an image collecting device and an apparatus according to any one of claims 9 to 16, wherein the image collecting device is configured to obtain an image to be assessed of a damaged vehicle.

21. A computer program comprising program codes, wherein when a computer runs computer programs, the program codes implement a method of any one of claims 1-8.
